# EUROPEAN PATENT SPECIFICATION

(11) **EP 2 211 814 B1**
(45) Date of publication and mention of the grant of the patent: **27.06.2012**
(21) Application number: 08853468.0
(22) Date of filing: 21.11.2008
(51) Int. Cl.: A61G 5/04, A61G 5/06, B62K 5/00, B62H 1/12

(54) **DRIVABLE ANTI-TIP CASTORS**
ANTREIBBARE ROLLEN MIT KIPPSICHERUNG
ROULETTES ANTI-BASCULEMENT ENTRAÎNABLES

(30) Priority: 30.11.2007 GB 0723465
(43) Date of publication of application: 04.08.2010
(73) Proprietor: Advanced Vehicle Concepts Limited, Cradock Road Luton Bedfordshire LU4 OFJ (GB)
(72) Inventor: BROWN, Fredrick, Charles, Hertfordshire AL4 9LH (GB)
(74) Representative: Mackenzie, Andrew Bryan
(86) International application number: PCT/GB2008/051094
(87) International publication number: WO 2009/068902

(56) References cited:
- EP-A- 1 584 312
- DE-C1- 4 323 937
- US-A- 5 904 214

## Description

This invention relates to apparatus for stabilising wheeled vehicles such as manual or powered mobility vehicles. The invention is particularly applicable, but by no means limited, for use with a mobility scooter (e.g. as used by the elderly, disabled or infirm).

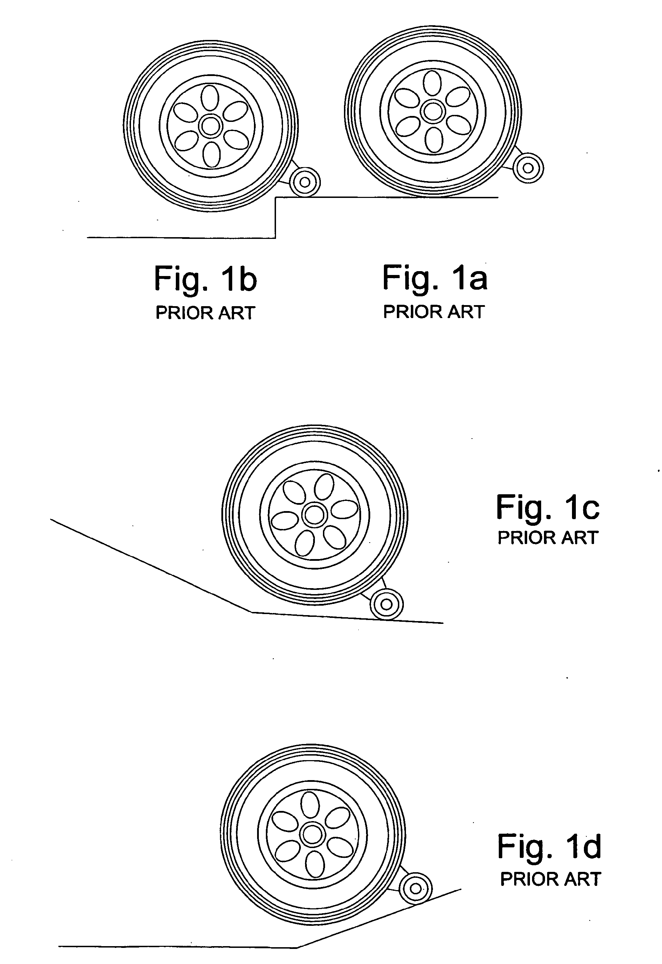

All mobility scooters and powered wheelchairs, as well as many other wheeled vehicles, are fitted with anti-tip wheels located behind the rearmost wheels. These wheels generally take the form of small fixed casters and are illustrated in Figure 1 a.

Should the vehicle tip back, for example, when negotiating an incline, the anti-tip wheels come into contact with the ground and prevent the vehicle toppling backwards by pivoting around the axle of the rearmost wheels. However, these anti-tip wheels can cause the vehicle to become "beached"; for example, when driving over a kerb, when negotiating a door stop laid across the floor at the bottom of a door opening or when at the beginning or end of a slope, as illustrated in Figures 1b, 1 c & 1d respectively. During beaching the vehicle is supported between the anti-tip wheels and a forward set of wheels and thus the rearmost set of wheels is lifted off the ground. As the lifted wheels are generally the driven wheels of the vehicle, this can lead to the vehicle becoming stuck, with the occupant unable to move the vehicle without an external push. Additionally, in the case that the suspended wheels are those fitted with the vehicle's brakes, this beaching can lead to a temporary loss of braking ability that could cause an accident.
A vehicle with all the features of the preamble of claim 1 is known from the document EP 1584312.

According to a first aspect of the invention there is provided a vehicle as claimed in Claim 1.

Preferably, said gears or rollers may be driven by contact with the driven ground-engaging wheels of the vehicle.

Preferably, said gears or rollers may be substantially the same size and shape as said anti-tip wheels.

Preferably, said anti-tip assembly moves upon said anti-tip wheels engaging with a surface such that said gears or rollers come into contact with said driven ground-engaging wheels, thus driving the anti-tip wheels.

Preferably, said anti-tip assembly features a returning mechanism, such as a spring, for returning the anti-tip assembly to its rest state upon said anti-tip wheels leaving contact with a surface.

The invention will now be described, by way of example, with reference to the drawings in which:
Figure 1 is a schematic side elevation of a vehicle fitted with an anti-tip wheel according to the prior art becoming beached;
Figure 2 is a schematic side elevation of a vehicle fitted with an anti-tip assembly;
Figure 3 is a schematic side elevation of an anti-tip assembly;
Figure 4 is a schematic rear elevation of an alternative, heavy-duty anti-tip assembly and a light duty anti-tip assembly; and
Figure 5 is a schematic side elevation of alternative methods of driving an anti-tip wheel.

The present embodiments depict mobility scooters (e.g. as used by the elderly, disabled or infirm). However, the principles described may readily be adapted for use in other wheeled vehicles in which anti-tip protection is required, such as wheelchairs, off-road buggies, mining vehicles, construction vehicles, farming vehicles, tractors and go-karts.

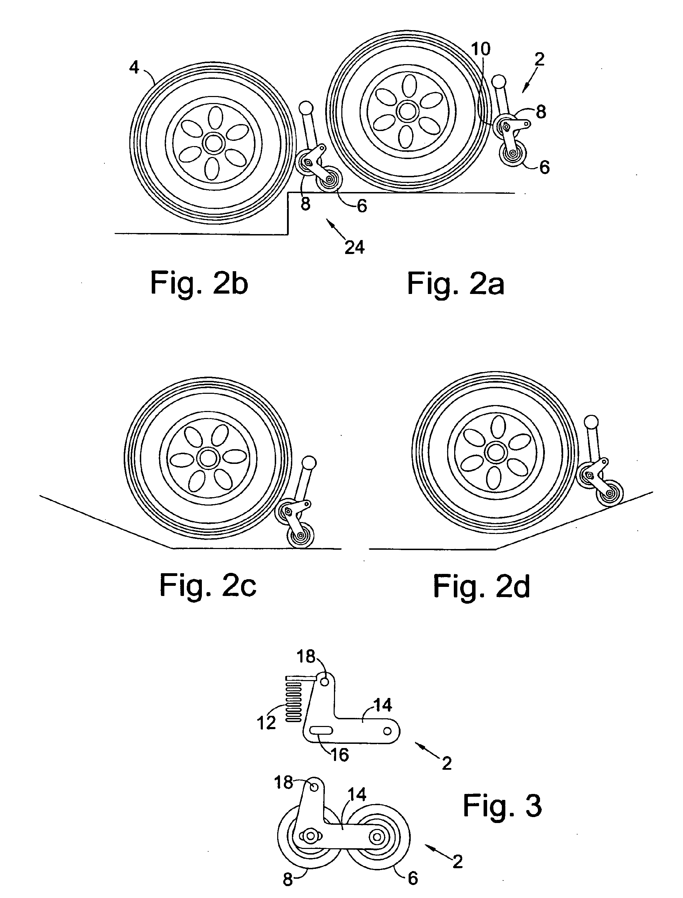

With reference to Figure 2a the anti-tip assembly 2 is shown in its rest state, located behind a ground engaging wheel 4. The anti-tip assembly features an anti-tip wheel 6 and an idler wheel 8. The two wheels preferably have tyres made of a solid resiliant material, such as rubber or some other elastomer. There is a gap 10 between the idler wheel and the ground engaging wheel, such that in the rest state the anti tip assembly does not impede the rotation of the ground engaging wheel. This gap may be maintained by a spring 12 as seen in Figure 3; alternatively other biasing means such as gas struts may be employed, or the assembly mounted such that its weight causes it to adopt this configuration.

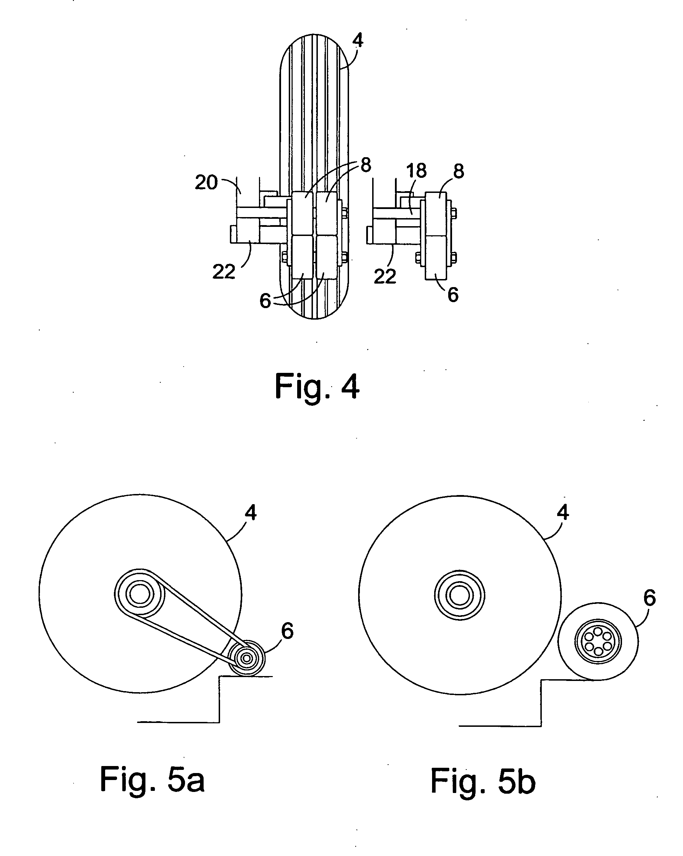

Anti-tip wheel 6 and idler wheel 8 are held in anti-tip assembly 2 by a fishplate 14 or similar construction as shown in Figure 3. This fishplate is provided with a slot 16 in which the idler wheel is mounted, allowing it to move under compression between ground engaging wheel 4 and anti-tip wheel 6. The slot is made such that the idler wheel is always in contact with the anti-tip wheel, and can only move closer to it increasing the pressure between them. The anti-tip assembly also features a stop 18. This stop is designed to maintain the anti-tip function of the assembly at extreme angles by engaging with some part of the vehicle frame 20. Figure 4 shows a fixing point 22 to which the assembly is pivotally mounted to the frame of the vehicle 20.

Figure 2b shows the anti-tip assembly in its engaged state. The vehicle has become "beached" upon a kerb 24 or similar, preventing the ground engaging wheel 4 from driving the vehicle or from offering any braking. Upon engaging with the kerb, the anti-tip assembly pivots around mounting 22 such that idler wheel 8 engages with the ground engaging wheel. In this engaged configuration, although the ground engaging wheel does not have direct traction with the ground, if it is driven in the forward direction then the idler wheel will communicate that rotation to the anti-tip wheel 6. As the anti-tip wheel is in contact with the ground, it will drive the vehicle out of its beached position.

Alternatively, if the vehicle is under motion and braking as it approaches the kerb, the beaching will only be temporary by virtue of the forward momentum of the vehicle, but using the prior art anti-tip wheels the vehicle will experience a temporary loss of braking whilst the ground engaging wheel is suspended above the ground. Using the new anti-tip assembly 2, however, the anti-tip assembly will again enter its engaged state, only now the motion of the vehicle relative to the ground will attempt to cause the anti-tip wheel 6 to rotate. This rotational force will be communicated to ground engaging wheel 4 by means of idler wheel 8, and assuming that the braking force on wheel 4 is maintained this will be communicated through the same assembly, resulting in maintenance of the braking force on the whole of the vehicle.

As shown in Figures 1c & 1d, the prior art anti-tip wheel can also cause the vehicle to become beached when beginning to ascend an incline or when finishing the descent of one. In the former case, the beaching and corresponding loss of drive from the ground engaging wheel could cause the vehicle to roll back if its momentum was insufficient, and in the latter case the beaching would again be transitory, but result in temporary loss of braking. In both of these cases the proposed anti-tip assembly would again enter its engaged state as shown in Figures 2c & 2d, offering continued drive or braking to the vehicle.

The above description indicates the preferred mechanism for carrying out the invention, but it will be obvious to one skilled in the art that the invention may be embodied in a great many of alternative forms and the description is not intended to limit the scope of this application. For example, the anti-tip assembly may engage upon moving linearly rather than pivoting by having a different attachment to the frame of the vehicle.

In the case that only one anti-tip assembly is provided, it may be driven by engaging with a small, non-ground engaging wheel on the driveshaft for the ground engaging wheels. The anti-tip assembly may feature two each of anti-tip wheels and idler wheels as indicated in Figure 4 for more heavy duty applications.

It will be appreciated that the invention may work when a vehicle is driven in reverse in which case the anti-tip wheels are effectively at the front of the vehicle. This option is intended to be encompassed by the present invention. The option also of having anti-tip wheels which are driven and/or braked at both ends of the vehicle is also encompassed by the present invention.

## Claims

1. A vehicle having a forward and a rear ground engageable wheel (4) defining a ground engagement plane, which plane tangentially intersects the forward and rear ground engageable wheels (4), the vehicle further including an anti-tip wheel (6) located behind the said rear wheel (4), and which is mounted on the vehicle side of the ground engagement plane such that it does not intersect the plane, the vehicle further including means to drive the anti-tip wheel, wherein the means to drive the anti-tip wheel is a gear or roller (8) driven by the means by which the ground-engaging wheels are driven, the vehicle **characterized by** a fishplate (14) for holding the anti-tip wheel (6) and gear or roller (8), wherein the fishplate (14) is provided with a slot (16) in which the anti-tip wheel (6), gear or roller (8) are mounted, such that the gear or roller (8) is always in contact with the anti-tip wheel (6).

2. A vehicle as claimed in Claim 1, wherein:
said gear or roller (8) is driven by contact with the driven ground-engaging wheels (4) of the vehicle.

3. A vehicle as claimed in Claim 2, wherein:
said gear or roller (8) engages with the outer circumference of the ground engaging wheel (4).

4. A vehicle as claimed in Claim 3, wherein:
said gear or roller (8) is moveable into and out of engagement with said ground engaging wheel (4).

## Patentansprüche

1. Fahrzeug mit einem vorderen und einem hinteren auf dem Boden abrollenden Rad (4), die eine Bodenabroll-Ebene definieren, wobei diese Ebene tangential die vorderen und hinteren auf dem Boden abrollenden Räder (4) schneidet, wobei das Fahrzeug weiterhin ein Kippschutz-Rad (6) einschließt, das hinter dem genannten Hinterrad (4) liegt und auf der Fahrzeug-Seite der Bodenabroll-Ebene derart befestigt ist, dass es diese Ebene nicht schneidet, wobei das Fahrzeug weiterhin eine Einrichtung zum Antrieb des Kippschutz-Rades einschließt, wobei die Einrichtung zum Antrieb des Kippschutz-Rades ein Zahnrad oder eine Rolle (8) ist, das durch die Einrichtungen angetrieben ist, durch die die auf dem Boden abrollenden Räder angetrieben werden, wobei das Fahrzeug **gekennzeichnet ist durch** eine Verbindungslasche (14) zum Halten des Kippschutz-Rades (6) und des Zahnrades oder der Rolle (8), wobei die Verbindungslasche (14) mit einem Schlitz (16) versehen ist, in dem das Kippschutz-Rad (6), das Zahnrad oder die Rolle (8) derart befestigt sind, dass das Zahnrad oder die Rolle (8) immer in Kontakt mit dem Kippschutz-Rad (6) steht.

2. Fahrzeug nach Anspruch 1, bei dem
das Zahnrad oder die Rolle (8) durch Kontakt mit den angetriebenen, auf dem Boden abrollenden Rädern (4) des Fahrzeuges angetrieben wird.

3. Fahrzeug nach Anspruch 2, bei dem
das Zahnrad oder die Rolle (8) mit dem Außenumfang des auf dem Boden abrollenden Rades (4) in Eingriff steht.

4. Fahrzeug nach Anspruch 3, bei dem
das Zahnrad oder die Rolle (8) in und außer Eingriff mit dem auf dem Boden abrollenden Rad (4) beweglich ist.

## Revendications

1. Véhicule ayant une roue avant et une roue arrière pouvant se mettre en prise avec le sol (4) définissant un plan de mise en prise avec le sol, lequel plan coupe de manière tangentielle les roues avant et arrière pouvant se mettre en prise avec le sol (4), le véhicule comprenant en outre une roue anti-basculement (6) positionnée derrière ladite roue arrière (4) et qui est montée sur le côté du véhicule du plan de mise en prise avec le sol, de sorte qu'elle ne coupe pas le plan, le véhicule comprenant en outre des moyens pour entraîner la roue anti-basculement, dans lequel les moyens pour entraîner la roue anti-basculement sont un engrenage ou rouleau (8) entraîné par les moyens grâce auxquels les roues de mise en prise avec le sol sont entraînées, le véhicule étant **caractérisé par** une ferrure d'assemblage (14) pour maintenir la roue anti-basculement (6) et l'engrenage ou le rouleau (8), dans lequel la ferrure d'assemblage (14) est prévue avec une fente (16) dans laquelle la roue anti-basculement (6), l'engrenage ou le rouleau (8) sont montés, de sorte que l'engrenage ou rouleau (8) est toujours en contact avec la roue anti-basculement (6).

2. Véhicule selon la revendication 1, dans lequel :
ledit engrenage ou rouleau (8) est entraîné par contact avec les roues de mise en prise avec le sol (4) entraînées du véhicule.

3. Véhicule selon la revendication 2, dans lequel :
ledit engrenage ou rouleau (8) s'engage avec la circonférence externe de la roue de mise en prise avec le sol (4).

4. Véhicule selon la revendication 3, dans lequel :
ledit engrenage ou rouleau (8) est mobile dans et en dehors de l'engagement avec ladite roue de mise en prise avec le sol (4).
